# EUROPEAN PATENT APPLICATION

(11) **EP 3 125 595 A1**
(43) Date of publication of application: **01.02.2017**
(21) Application number: 15306235.1
(22) Date of filing: 30.07.2015
(51) Int. Cl.: H04W 12/06

(54) **METHOD TO PROVIDE IDENTIFICATION IN PRIVACY MODE**

(71) Applicant: GEMALTO SA, 92190 Meudon (FR)
(72) Inventor: PAULIAC, Mireille, 13881 GEMENOS CEDEX (FR); PEIRANI, Béatrice, 13881 GEMENOS CEDEX (FR)
(74) Representative: Scheer, Luc

(57) **Abstract**

The present invention relates to a method to provide user identification in privacy mode for using a user device (UE) with a Mobile Network Operator subscription to an on-line service offered by a service provider (SP) thanks to a GBA infrastructure comprising at least a Network Application Function (NAF) server suitable to retrieve at least a GBA secret key (K_{NAF}) shared with the user device (UE). According to the invention the NAF server is used as identity provider and verifier.

## Description

### FIELD OF THE INVENTION

The present invention relates to a method to provide user identification in privacy mode using a user device with Mobile Network Operator subscription to an on-line service offered by a service provider.

The invention also pertains to a service provider server suitable for providing service under identification and for processing service requests comprising a one-time identity from user device according to the invention.

The invention also concerns a user device to implement the method of the invention.

The invention relates at last to a network application function (NAF) server suitable to retrieve a GBA secret key shared with at least a user device and to implement the invention.

### BACKGROUND OF THE INVENTION

Majority of users and consumers associations make pressure on internet big actors to better take into account their privacy. Furthermore, privacy will be a mandatory feature imposed by regulation, for example the currently drafted General Data Protection Regulation in Europe. On a general point of view, several standardization bodies whatever the fields include privacy in addition to security in their scope.

Future technical solutions that will be deployed in mobile devices and more generally in web context have to consider this privacy feature as essential for being adopted. In addition mobile-based solutions would be unavoidable since mobile device is the most common equipment used by consumers. In such environment, complex mechanisms based on PKI may be difficult or even not possible to deploy. Indeed such mechanisms may not fit depending on the environment, infrastructure, costs...

Further alternative and advantageous solutions would, accordingly, be desirable in the art.

### SUMMARY OF THE INVENTION

The present invention aims at providing a method to provide identification in privacy mode in online context, and in particular in a GBA (Generic Bootstrapping Architecture specified by 3GPP) infrastructure.

The present invention is defined, in its broadest sense, as a method to provide user identification in privacy mode using a user device to an on-line service offered by a service provider thanks to a GBA infrastructure comprising at least a Network Application Function (NAF) server suitable to retrieve at least a GBA secret key shared with the user device, said identification provision method comprising the steps of:
- for the user device, requesting at least one one-time identity to the NAF,
- for the NAF, generating at least one one-time identity, storing it, encrypting it using a GBA secret key and providing the encrypted one-time identity to the user device, the NAF thus playing the role of an identity provider,
- for the user device, decrypting the one-time identity using the GBA secret key and requesting a service to a service provider using the decrypted one time identity,
- for the service provider, forwarding the one-time identity to the NAF,
- for the NAF, verifying the one-time identity, sending verification result to the service provider and discarding the one-time identity once verified,
- for the service provider, granting access to the user depending on the verification result.

This invention relies on a GBA infrastructure and on the related standard, which allows an user device also named user equipment (UE) and a network application function (NAF) server to share a secret key by interworking with a bootstrapping server function (BSF). The secret key derived can be used for further communication between the UE and the NAF.

According to the invention the role of the identity provider is played by a NAF server. The invention involves an extension of the NAF capability in order to generate and store an one-time identity. The one-time identity is used by the user device to apply for a service provided by a service provider and is valid for a single use. The usage of this one-time identity according to the invention guarantees the privacy (anonymization, unlinkability) and non-traceability of all mobile device owners accessing online services without additional equipment.

The user can ask for a collection of one-time identities to be provided to access different services. This enforces the privacy features: the observation of the communications starting from the user device/equipment cannot link a specific request for accessing a service to a subsequent request for identity.

The invention has the advantage to be transparent for the users since there is no need to remember and enter login and password. By relying on the GBA servers and on the secret key shared according to the GBA standard, the invention offers one of the highest security level solutions. It improves the security compared to other commonly used authentication methods as for example SMS OTP or login/password which provide weaker security. Static passwords with low entropy are generally chosen by the user and such very weak passwords are easily guessed by trivial attacks.

The invention benefits from existing infrastructures: MNO infrastructures worldwide deployed, used by billions of persons and SECURE. It thus relies on the MNO authentication infrastructure and does not require PKI-based architecture facilitating/enabling the deployment of privacy feature in smooth way.

According to a preferred implementation, the service request of the user device to the service provider comprises a MAC further verified by the NAF with the one-time identity.

The insertion of a MAC in the service request enables a complementary check by the NAF as an identity provider when it also receives the one time identity from the service provider. It enables to check that the request was issued by a user authenticated by means of GBA as it proves that the user has a secret NAF key. It is here noted that the secret key used to calculate the MAC can be the one used for encryption/decryption of the one-time identity but also another one dedicated for MAC calculation and also accessible by the NAF.

According to a particular embodiment, a collection of one-time identities are provided to the user device at once by the NAF.

This embodiment enables to limit the bandwidth necessary for the implementation of the invention and to provide the user device with autonomy for further identifications.

The invention also relates to a service provider server suitable for providing service under identification and for processing service requests comprising a one-time identity from user devices, said service provider server comprising at least a request processing module able to receive service requests from user devices, extract one-time identity, send the extracted one-time identity to a NAF server of a GBA infrastructure, receive verification result from the NAF, granting access to the service for the user device depending on the received verification results.

Such a service provider server is able to process specific requests according to the invention from the user device while this one is asking for access to a service. Such a server has the ability to forward such requests to a NAF server in an infrastructure GBA.

The invention also relates to a device compliant with a GBA infrastructure comprising at least a network application function (NAF) server suitable to retrieve a GBA secret key shared with the device, said device comprising device request processing module suitable to request one-time identities to the NAF server and to use said one-time identities in service requests to a service provider and decryption module to decrypt one-time identity received from the NAF using the shared secret key.

Such a device enables a user of this device to get an access granted for a service while using the GBA existing infrastructure in which it is active for other purpose.

At last the invention relates to a network application function (NAF) server suitable to retrieve a GBA secret key shared with a user device within a GBA infrastructure, said NAF server comprising at least a one-time identity generator for generating one-time identity for use in identification of the user device to access a service provided by a service provider, an encryption module to encrypt said one-time identity using GBA secret key shared with the user device, a verification module to verify one-time identity received from a service provider and to send verification result to the service provider and a one-time identity management module to discard one-time identity as soon as verified once.

Such a NAF server is the core of the invention. The NAF server has, according to the invention, a role of identity provider in addition with its other functions. It uses its ability to retrieve secret keys according to the GBA standard to implement the invention. GBA keys are used to encrypt the identifier which thus remains confidential. The privacy is thus assured in a simple and efficient way. Such a NAF has also the ability to verify identification of a user asking for a service on behalf of a service provider and to inform the service provider in return of the result of the identification.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows the environment in which the invention applies and illustrates the functioning of the invention;
- Figure 2 schematically shows a NAF server and a device of the invention;
- Figure 3 schematically shows a service provider server of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. For clarity, only those elements and steps which are useful to the understanding of the present invention have been shown in the drawings and will be described.

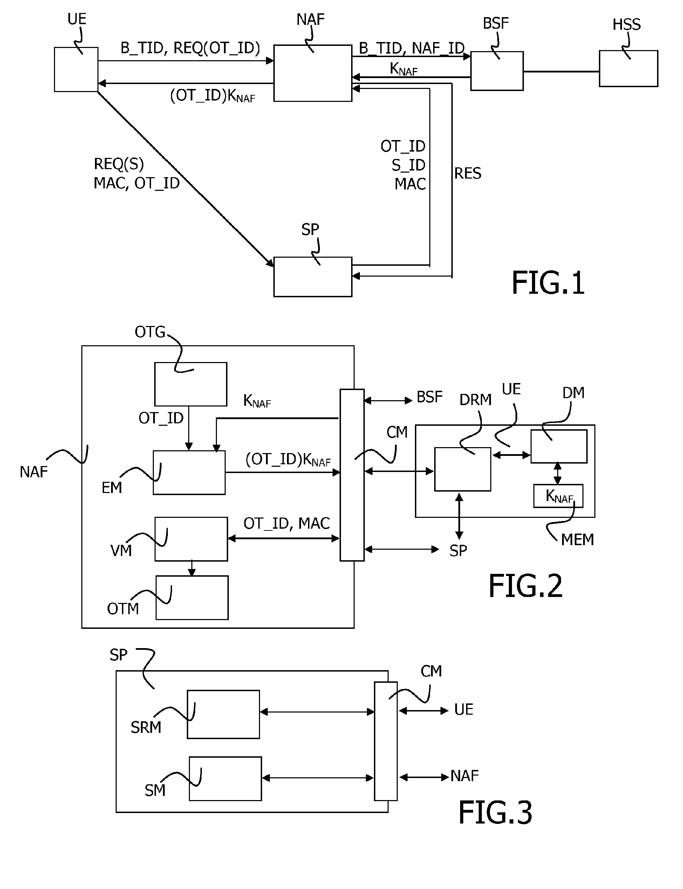

Figure 1 schematically shows GBA infrastructure in which the invention finds its application. It comprises a network application function server NAF linked to a bootstrapping server function server BSF itself in communication with a home subscriber server HSS.

A GBA compliant user device UE is able to communicate with the NAF and shares at least a secret key with it.

In compliance with the GBA standard, the NAF is able to request a secret key K_{NAF} from the BSF working in collaboration with the home subscriber server HSS. For this purpose the NAF sends to the BSF an identifier of the user device B_TID and its own identifier NAF_ID. A secret key Ks_(ext/int)_NAF as defined in GBA specifications is thus retrieved by the NAF. To simplify notations this key Ks_(ext/int)_NAF will be noted K_{NAF} in the following. In parallel, in compliance with the GBA standard, the user device UE can calculate the key K_{NAF}.

According to the invention, the user device UE is willing to enter in communication with a service provider SP to have access to a service S. Such a request necessitates a preliminary acquisition of a one-time identifier OT_ID from the NAF. The user device UE thus contacts the NAF as an identity provider in order to receive a one-time identity, or a collection of one-time identities, for unique usage.

For this purpose, the user device UE uses as identifier the identifier as obtained during the GBA Bootstrapping phase, to perform its request to the service provider SP. This identifier is noted B_TID. The user device UE thus sends the identifier B_TID to the NAF with a request for a one-time identifier REQ(OT_ID). The NAF contacts the BSF to retrieve a key K_{NAF}. Classical GBA messages allowing the NAF to receive the NAF-key associated to the UE from the BSF are performed. Once the NAF has retrieved a key K_{NAF} from the BSF for a specific user, the NAF does not need to systematically contact the BSF for this user, as long as the key K_{NAF} is valid.

Acting as an identity provider, the NAF generates besides a one-time identifier OT_ID or collection of OT_IDs for unique usage and stores it or them.

Then, once the NAF has retrieved the NAF key K_{NAF} associated to user, it encrypts one or several one-time identifier OT_ID(s) with the NAF key K_{NAF} in order to keep confidential the one-time identifier OT_ID value to be used by the user device UE for requesting an online service S. The NAF then sends the encrypted one-time identifier (OT_ID)K_{NAF} to the user device UE. The encryption prevents the mapping between the identifier B-TID, representing the user device UE, and the one-time identity OT_ID.

It is here further noted that sending a collection of one-time identifiers enables to save bandwidth and information on the potential number of accesses.

As the user device UE is GBA compliant, it is able to calculate the NAF key K_{NAF}. Once this key is calculated, it decrypts the encrypted one-time identifier (OT_ID)K_{NAF} or collection of one-time identifiers received. The user device UE then sends a service request REQ(S) to the online service provider SP, this request comprising the decrypted one-time identifier OT_ID as user identifier. Possibly additional data, for example a service identifier S_ID is included.

Preferably the user device UE also calculates a MAC using a GBA secret key which can be the same as used for the decryption or another dedicated one. In this case, the MAC is included in the message comprising the request.

The service provider SP receives the request and the one-time identifier OT_ID and subsequently contacts the identity provider which is the NAF to forward the information received from the user. The service provider SP sends the received one-time identifier OT_ID, a service identifier S_ID and, when available the received MAC.

The NAF then checks the MAC and the one-time ID, which means to check that the request REQ(S) was issued by a user authenticated by means of GBA as the NAF key is used. If the received one-time identifier OT_ID was not previously used and has a correct value, a positive result RES is sent back to the service provider SP in order for it to grant access to the service S for the user device UE. As soon as the service provider SP receives a request with a given one-time identifier OT_ID, this one-time identifier OT_ID is no longer valid and it cannot be used for another usage.

If the one-time identifier OT_ID was already used or if the value of the one-time identifier OT_ID is not correct, the checking results in a negative result RES returned to the service provider SP which will send a deny of service to the user device UE.

In any case, a result RES of the verification is sent to the service provider SP and the communication shall be protected at least in integrity. The access to the service S is granted in function of the received result RES. When the verification is positive, the NAF discards the given verified one-time identifier OT_ID in order to insure that it is used only once.

Figure 2 schematically shows the structures of a NAF server of the invention and of a device UE of the invention. Classically the server NAF comprises communication means CM to communicate with the device UE, with the BSF and with service providers. According to the invention the server NAF further comprises at least a one-time identity generator OTG sending the one-time identity to an encryption module EM which encrypts it using the shared secret key K_{NAF} before sending to the device UE.

The server NAF of the invention further comprises at least a verification module VM able to receive the one-time identity OT_ID and, when available, the MAC as received from the service provider SP asking for identification of the user device UE from which a request has been received. It comprises at least a one-time identity management module OTM able to discard the one-time identity OT_ID once it has been used and thus verified. This one-time identity management module OTM typically comprises software to control a table in memory or equivalent implementation enabling to list valid and invalid identities.

The device UE comprises all features of a GBA including a memory MEM storing at least the shared secret key K_{NAF} and a decryption module DM able to use this key to decrypt encrypted data. This decryption module DM is used according to the invention to decrypt the one-time identity. The device UE further includes a device request module DRM able to process requests according to the invention towards the NAF server and towards the service provider SP.

Figure 3 schematically shows the structure of a service provider server SP of the invention. This server also comprises communication means CM to communicate with the user device UE and with the server NAF. It further includes service means SM to trigger a service S, the triggering of the service depending, according to the invention, on the result of the verification of the identification done by the NAF. It also includes a service request processing module SRM able to process request from user devices and forwarding request data to the server NAF for verification of the identification.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to provide user identification in privacy mode using a user device (UE) with Mobile Network Operator subscription to an on-line service offered by a service provider (SP) thanks to a GBA infrastructure comprising at least a Network Application Function (NAF) server suitable to retrieve at least a GBA secret key (K_{NAF}) shared with the user device (UE), said identification provision method comprising the steps of:
- for the user device (UE), requesting (REQ(OT_ID)) at least one one-time identity (OT_ID) to the NAF,
- for the NAF, generating at least one one-time identity (OT_ID), storing it, encrypting it using a GBA secret key (K_{NAF}) and providing the encrypted one-time identity ((OT_ID)K_{NAF}) to the user device (UE), the NAF thus playing the role of an identity provider,
- for the user device (UE), decrypting the one-time identity (OT_ID) using the GBA secret key (K_{NAF}) and requesting a service to a service provider (SP) using the decrypted one time identity (OT_ID),
- for the service provider (SP), forwarding the one-time identity (OT_ID) to the NAF,
- for the NAF, verifying the one-time identity (OT_ID), sending verification result to the service provider (SP) and discarding the one-time identity (OT_ID) once verified,
- for the service provider (SP), granting access to the user depending on the verification result.

2. Method according to claim 1, wherein the service request (REQ(S)) of the user device (UE) to the service provider (SP) comprises a MAC further verified by the NAF with the one-time identity (OT_ID).

3. Method according to claim 2, wherein the secret key used to calculate the MAC is the one used for encryption/decryption of the one-time identity (OT_ID) or another one dedicated for MAC calculation and also accessible by the NAF.

4. Method to according to claim 1, wherein a collection of one-time identities are provided to the user device (UE) at once by the NAF.

5. Service provider server (SP) suitable for providing service under identification and for processing service requests (REQ(S)) comprising a one-time identity (OT_ID) from user devices (UE), said service provider server (SP) comprising at least a service request processing module (SRM) able to receive service requests (REQ(S)) from user devices (UE), extract one-time identity (OT_ID), send the extracted one-time identity (OT_ID) to a NAF server (NAF) of a GBA infrastructure, receive verification result from the NAF, granting access to the service for the user device (UE) depending on the received verification results.

6. Device (UE) compliant with a GBA infrastructure comprising at least a network application function server (NAF) suitable to retrieve a GBA secret key (K_{NAF}) shared with the device (UE), said device (UE) comprising a device request processing module (DRM) suitable to request one-time identities (REQ(OT_ID)) to the NAF server (NAF) and to use said one-time identities (OT_ID) in service requests (REQ(S)) to a service provider (SP) and decryption module (DM) to decrypt one-time identity (OT_ID) received from the NAF using the shared secret key (K_{NAF}).

7. Network application function server (NAF) suitable to retrieve a GBA secret key (K_{NAF}) shared with a user device (UE) within a GBA infrastructure, said NAF server (NAF) comprising at least a one-time identity generator (OTG) for generating one-time identity (OT_ID) for use in identification of the user device (UE) to access a service provided by a service provider (SP), an encryption module (EM) to encrypt said one-time identity (OT_ID) using GBA secret key (K_{NAF}) shared with the user device (UE), a verification module (VM) to verify one-time identity (OT_ID) received from a service provider (SP) and to send verification result to the service provider (SP) and a one-time identity management module (OTM) to discard one-time identity (OT_ID) as soon as verified once.
